# EUROPEAN PATENT APPLICATION

(11) **EP 3 306 030 A1**
(43) Date of publication of application: **11.04.2018**
(21) Application number: 17192483.0
(22) Date of filing: 21.09.2017
(51) Int. Cl.: E06C 5/04, B60R 3/00

(54) **LADDER ASSEMBLY**

(30) Priority: 21.09.2016 GB 201616076
(71) Applicant: Hymix Ltd, Telford, Shropshire TF3 3AY (GB)
(72) Inventor: The designation of the inventor has not yet been filed
(74) Representative: Wynne-Jones, Lainé and James LLP

(57) **Abstract**

A ladder assembly for, in use, providing access to the upper regions of a vehicle, the ladder assembly comprising:
- a ladder (10) having upper and lower ends when oriented for use, and being pivotally coupled to a fixed point (a) relative to said vehicle for pivotal movement about a substantially horizontal axis between a stowed position, in which said ladder (10) extends substantially vertically from said fixed point, and a deployed position, in which said ladder (10) is inclined from said upper to said lower end;
- a latch member (18) coupled to said ladder (10) at a location along its length intermediate said upper and lower ends; and
- a latch receiving member (16) coupled to a fixed point relative to said vehicle and configured to receive said latch member (18) and permit, in use, movement of the latch member (18) therein between a first latching position (20b) and a second latching position (20b) corresponding to respective said stowed and deployed positions of said ladder (10).

## Description

### TECHNICAL FIELD

This invention relates generally to a ladder assembly configured to be moved between a stowed position and an operational position; and, more particularly, but not necessarily exclusively, to a ladder assembly suitable for a vehicle such as a concrete mixer truck and the like, to enable quick access to the upper reaches of the truck so that an operative may observe the interior of the mixing drum and charge hopper associated with the truck.

### BACKGROUND

A typical transit mixing vehicle, such as a concrete mixer truck, comprises a drum mounted for rotation about an inclined axis and an opening on the raised end which serves to receive ingredients to be mixed and to discharge the mixed material during a pour operation. The drum is typically provided with internal mixing blades that move the ingredients toward the lower end of the drum for mixing as the drum is rotated in a first direction, and which move the mixed material upward for discharge when the drum is rotated in the opposite direction. A charge hopper is mounted in relation to the drum opening, and is used to feed ingredients into the drum for mixing. A chute is also provided for facilitating discharge of mixed material (e.g. concrete) from the drum for use.

There is a frequent need for an operative to access the uppermost regions of the truck in order to observe, repair, maintain and service components such as the chute and charge hopper mentioned above. In order to facilitate this, a ladder is provided which is typically fixed to the support assembly carrying the upper portion of the drum, the support assembly itself being mounted on the truck chassis.

Clearly, whilst the ladder must rest on the ground for use, it must be raised above ground level when the vehicle is in transit. Accordingly, such ladders tend to be provided in (at least) two parts, an upper part and a lower part, wherein the lower part is configured for movement relative to the upper part between a raised (stowed) configuration and a lowered (operable) configuration.

In one prior art assembly, the lower part of the ladder is hingedly mounted to the upper part, such that the lower part can be 'folded' about the hinge between the stowed and operable configurations. In another prior art assembly, the lower part of the ladder is slidably mounted relative to the upper part within vertical guide members, such that an operative can slide the lower part relative to the upper part between the stowed and operable configurations. In both cases, a clip or locking member is typically provided to retain the two ladder parts in a selected configuration, which locking member must be released to allow relative movement of the lower part. However, gravity acting on the lower part naturally biases it downward, such that when the assembly is released from the stowed configuration (or being moved from the operable configuration to the stowed configuration), the operative must exert significant control and effort to ensure that the lower part does not simply drop down and damage the mounting mechanism between the lower and upper ladder parts or injure the operative or another person. Furthermore, if the ladder assembly is subjected to an impact, the above-mentioned mounting mechanism can be damaged, thus potentially preventing effective deployment or stowing of the ladder. Still further, two-part ladder assemblies of this type, having a pivotal or sliding mechanism therebetween, introduce a risk of the operative (or someone else) trapping their fingers in the mechanism between the two ladder parts and injuring themselves.

Other prior art assemblies have been proposed, some of which purport to address the above-described issues. However, many such assembly configurations have resulted in complex deployment mechanisms that require the operative to change grip and/or utilise a plurality of different devices/means to complete the deployment process.

Another consideration in this field relates to angle of the ladder (relative to vertical), when in the stowed and operable configurations. In the stowed configuration (for transit), it is clearly highly undesirable for any part of the ladder assembly to protrude laterally beyond the side edges of the truck (defined by the chassis and wheels). Thus, (at least) the upper parts of the ladder, which is traditionally fixed, has conventionally been mounted vertically on the drum support assembly. In some prior art arrangements, the lower part, when deployed, is aligned with the upper part and also vertical, resulting in an entirely vertical ladder extending from the ground to the upper regions of the truck. However, it is becoming increasingly understood and recognised that vertical ladders of such a length pose a danger to the user. Thus, in alternative prior art assemblies, the lower part of the ladder may decline outwardly (from the upper ladder part to the ground) when in the deployed configuration (and substantially vertical in the raised, stowed configuration). However, this type of arrangement also poses a danger to the user, as it requires greater concentration and introduces a further risk associated with the resultant inconsistent climbing pattern, e.g. missed footing.

It would, therefore, be desirable to provide a ladder assembly that is selectively moveable between a stowed configuration and a deployed configuration and that addresses at least some of the above-mentioned issues.

### SUMMARY

In accordance with an aspect of the present invention, there is provided a ladder assembly for, in use, providing access to the upper regions of a vehicle, the ladder assembly comprising:
- a ladder having upper and lower ends when oriented for use, and being pivotally coupled to a fixed point relative to said vehicle for pivotal movement about a substantially horizontal axis between a stowed position, in which said ladder extends substantially vertically from said fixed point, and a deployed position, in which said ladder is inclined from said upper to said lower end;
- a latch member coupled to said ladder at a location along its length intermediate said upper and lower ends; and
- a latch receiving member coupled to a fixed point relative to said vehicle and configured to receive said latch member and permit, in use, movement of the latch member therein between a first latching position and a second latching position corresponding to respective said stowed and deployed positions of said ladder.

In an exemplary embodiment, in said stowed position, the lower end of said ladder is raised above ground level and in said deployed position, the lower end of said ladder rests on the ground surrounding said vehicle.

The ladder may be provided as a single piece or unitary ladder of a length that can extend from the fixed point to the ground surrounding a vehicle when in a deployed configuration. Alternatively, the ladder may comprise two ladder portions, movably mounted relative to each other, and wherein, in said stowed configuration, said ladder portions are substantially parallel and adjacent to each other, and in said deployed configuration, an upper region of a first of said ladder portions is adjacent to a lower region of a second of said ladder portions, and the first and second ladder portions are substantially aligned, with a lower region of said first ladder portion resting on the ground surrounding said vehicle. In this case, the second ladder portion may be pivotally mounted to said fixed point at an upper region thereof and said latch member is mounted at an opposing lower region thereof.

The latch receiving member may comprise a guide member with which said latch member engages, in use, said guide member being configured to guide said latch member, during movement thereof, between said first and second latching positions; and optionally wherein said guide member is a channel within which said latch member is received, said channel extending between said first and second latching positions. The first and second latching positions may be defined by respective recessed portions provided at respective ends of said channel; and/or wherein the guide member may define a declined path from said first latching position, in which said ladder is in said stowed position, to said second latching position, in which said ladder is in said deployed position, and optionally wherein said latch member comprises a lateral bar configured to be received within each of said recessed portions.

The ladder assembly may further comprise one or more grip members coupled to said ladder and configured to enable, in use, an operative to release said latch member from said first or second latching position and move said ladder between said stowed and deployed positions; and/or the ladder may comprise a landing platform at its upper end, said landing platform being coupled at a fixed point to said vehicle, and said ladder being pivotally coupled to said landing platform such that it extends downwardly below said landing platform and being configured for pivotal movement about a substantially horizontal axis between said stowed and deployed positions.

The ladder may, at least in said deployed configuration, comprise a pair of elongate uprights arranged in parallel spaced-apart relation to each other and having a series of spaced-apart rungs extending therebetween along their length, wherein the length of the uprights define respective side edges of said ladder and the region containing said rungs defines the rear and front surfaces of the ladder; said ladder being pivotally coupled, in use, to said fixed point with said rear surface thereof facing said vehicle and said latching mechanism being configured to be coupled to a fixed point on said vehicle adjacent the rear surface of said ladder, wherein the application to said ladder of a linear force toward or away from said latching mechanism results in said pivotal movement into, respectively, said stowed and deployed positions; and optionally said elongate uprights may comprise unitary elongate uprights.

Optionally, the latch member is coupled to said side edges of said ladder and extends into said latch receiving member from the rear of said ladder.

The latch member may be coupled to said side edges of said ladder by means of a respective pair of opposing arms extending generally orthogonally from the rear of said ladder, said latch member comprising a bar that extends laterally between the distal ends of said arms.

The latch receiving member may comprise a channel in which said bar at the end of said opposing arms is received for sliding movement, said channel extending from said first latching position to said second latching position; and optionally each latching position may be defined by a respective recessed portion at each end of said channel, wherein said bar is configured to be received in a selected one of said recessed portions to latch said ladder in a selected on of the stowed position or deployed position respectively.

The channel may be inclined from said second latching position to said first latching position, and the ladder assembly may optionally further comprise a pair of handles attached to respective side edges of said ladder, at or adjacent the location of said arms, the handles being configured, in use, to permit an operative to lift said ladder from a position at the front thereof, thereby to lift said bar out of a recessed portion and allow movement of said ladder between the stowed and deployed positions.

Guide means may be provided on the lower end of the ladder to reduce friction between said lower end of said ladder and the ground to facilitate sliding movement of said lower end along the ground during movement of the ladder between said stowed and deployed positions.

According to another aspect of the present invention, there is provided a truck having mounted thereon a ladder assembly substantially as described above. Optionally, the truck may comprise a mixer truck.

Thus, the ladder can be provided in a single length or, indeed, in two lengths movably (e.g. slidably) mounted relative to each other, and moved between a stowed configuration and a deployed configuration simply by pushing or pulling the ladder relative to the latching mechanism so as to pivot the ladder about the fixed point, the latching mechanism then serving to lock the ladder in a selected on of the two positions.

These and other aspects of the present invention will become apparent from the following specific description.

### BRIEF DESCRIPTION OF THE DRAWINGS

Embodiments of the present invention will now be described, by way of examples only, and with reference to the accompanying drawings, in which:
Figure 1 is a schematic perspective view of a ladder assembly according to a first exemplary embodiment of the present invention when in the stowed position;
Figure 2 is a schematic side view of a ladder assembly according to a first exemplary embodiment of the present invention, when in the deployed position;
Figures 3A, 3B and 3C are schematic partial, cut-away diagrams illustrating the operation of the latch member and latching mechanisms in a ladder assembly according to an exemplary embodiment of the invention, when the ladder is moved from a stowed position (Figure 3A), through an intermediate position (Figure 3B) to a deployed position (Figure 3C);
Figure 4 is a schematic perspective view of a ladder assembly according to a second exemplary embodiment of the present invention when in the stowed position;
Figure 5 is a schematic side view of a ladder assembly according to a second exemplary embodiment of the present invention, when in the stored position; and
Figures 6A to 6C are schematic diagrams illustrating the operation of the latch member and latching mechanisms in a ladder assembly according to a second exemplary embodiment of the invention, when the ladder is moved from a stowed position (Figure 6A), through an intermediate position (Figure 6B) to a deployed position (Figure 6C);.

### DETAILED DESCRIPTION OF EXAMPLE EMBODIMENTS OF THE INVENTION

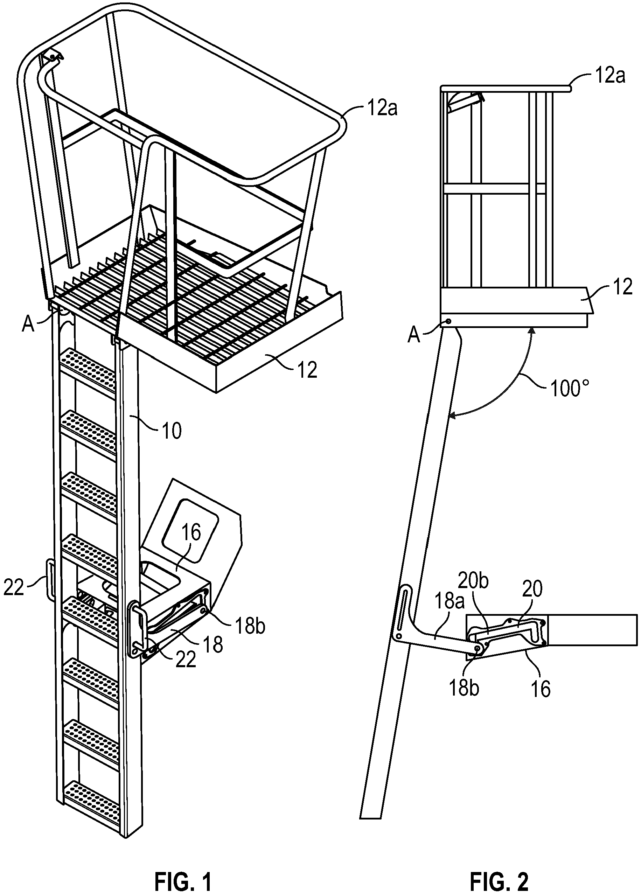

Referring to Figure 1 of the drawings, a ladder assembly according to an exemplary embodiment of the present invention comprises a ladder 10 pivotally coupled to a fixed point A at the base of a landing platform 12. The landing platform can be mounted or otherwise fixed to the drum support assembly (not shown) of a mixer truck or the like, and may include a cage or safety rail assembly 12a.

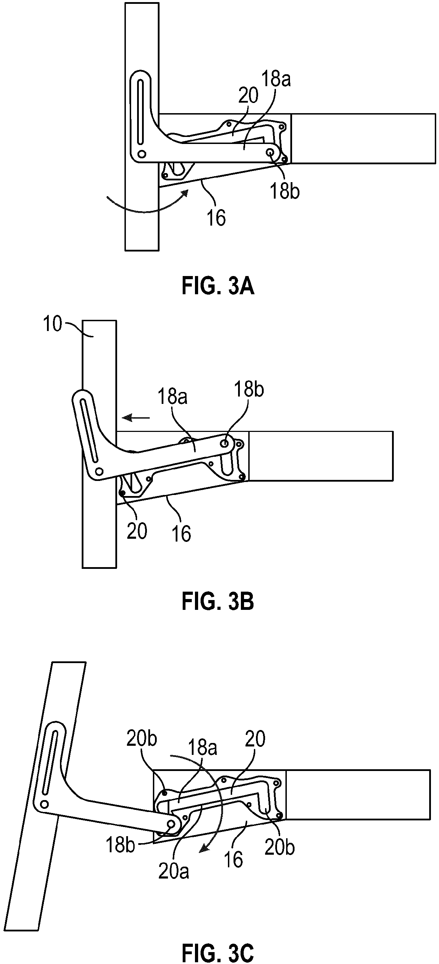

A deployment mechanism for an exemplary embodiment of the invention comprises a housing 16 and a latch member 18, wherein the housing 16 is mounted to the drum support assembly, some distance immediately below the landing platform 12, and protrudes laterally therefrom such that, when the ladder 10 is substantially vertically oriented, the distal edge of the housing is adjacent to, or even abuts, the side edges of the ladder 10. The outer configuration of the housing 16 is not considered to be essential to the invention, but in the exemplary embodiment illustrated, it is of generally rectangular box-like configuration. A channel 20 is defined through the housing 16, extending rearwardly from a location close to the above-mentioned distal edge to a location close to the rear end of the housing 16 (nearest the drum support assembly to which it is mounted). The channel comprises an elongate, generally central, substantially linear channel portion 20a which terminates at each end with a respective recessed portion 20b (this can be seen more clearly in Figures 2 and 3C of the drawings). The linear channel portion 20a is substantially uniformly inclined (in the direction from the front of the housing to the rear).

The latch member 18 is defined by a pair of generally L-shaped side arms 18a, each side arm comprising a pair of orthogonal legs defining a corner therebetween, and being pivotally coupled at its 'corner' to a respective side edge of the ladder 10, such that a first leg extends generally upwardly relative to the pivotal coupling point (longitudinally relative to the respective side edge of the ladder 10) and a second leg extends rearwardly of the ladder 10 toward the housing 16. A bar 18b extends between the distal ends of the second legs. The latch member 18 is mounted on the ladder at roughly the same location along its length as the relative location of the housing 16 such that the latch member 18, thus configured, extends into the channel 20 and is slidably received therein.

Referring additionally to Figures 3A, 3B and 3C of the drawings, in the stowed configuration, the ladder 10 is substantially vertical and immediately adjacent (or abutting) the housing 16, and the first leg of each L-shaped side arm is also substantially vertical. The latch member 18 is fully inserted along the length of the channel 20 and the bar 18b is held within the recessed portion 20b at the end furthest from the ladder. A handle 22 is provided on the first leg of each of the side arms 18a. Because the channel 20 is inclined, the ladder is, in this configuration raised above ground level for transit.

If it is required to move the ladder from the stowed configuration to the deployed configuration, an operative stands in front of the ladder 10, holds the handles 22 and lifts the ladder generally vertically by a sufficient amount to lift the bar 18b of the latch member 18b out and clear of the end recessed portion 20b (Figure 3B), causing the side arms to pivot slightly relative to the side edges of the ladder 10. The operative can then pull the ladder 10 back (towards the operative) which has the effect of a) causing the ladder to pivot outwardly from the fixed mounting point on the landing platform 12, and b) causing the latch member 18 to slide forward along the central channel portion 20a until the bar 18b drops into the recessed portion 20b at the front end of the housing 16 (see Figure 3C). The decline defined by the central channel portion 20a in this direction of movement causes the ladder to drop down toward the ground and the pivoting movement of the ladder about the fixed mounting point on the landing platform results in the ladder being inclined relative to vertical, as illustrated in Figure 2 of the drawings. Guides (of, for example, Nylon) may be provided on the lower ends of the ladder 10 to facilitate sliding movement thereof along the ground to complete the deployment process, but this is not necessarily considered to be essential to the invention.

When it is required to move the ladder 10 back to the stowed configuration, the operative can simply grab the handles 22 from the front of the ladder 10, once again, and lift it enough to raise the bar clear of the recessed portion 20b, before pushing the ladder (toward the housing 16), causing the latch member 18 to slide rearwardly along the central channel portion 20a until the bar reaches the furthest recessed portion 20b, at which point the operative can simply release the ladder and allow the bar 18b to drop into that recessed portion 20b to lock the ladder in the stowed position. As a result of this process, the ladder is returned to the vertical orientation and raised above ground level for transit.

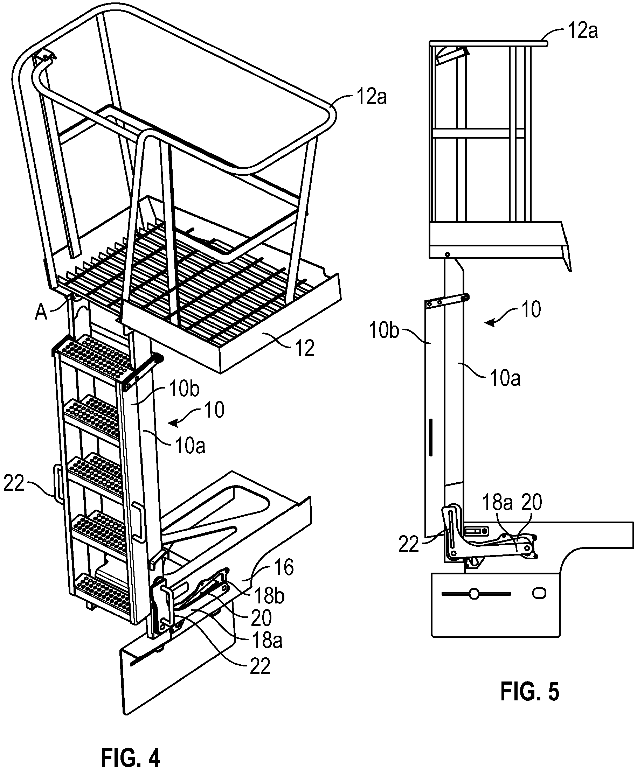

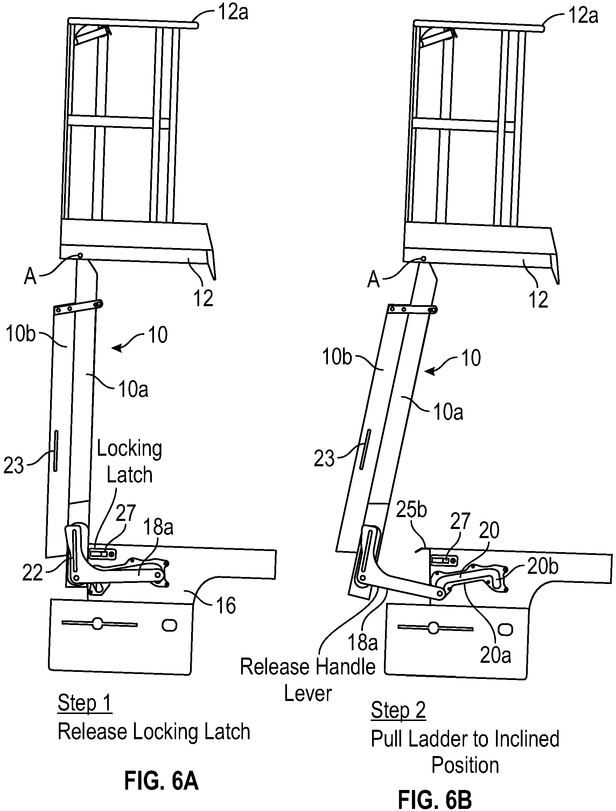

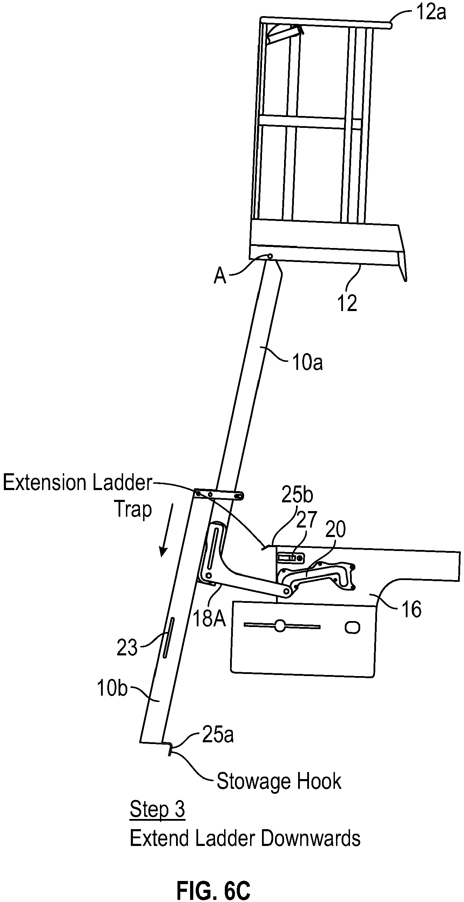

Referring to Figures 4 and 5 of the drawings, in an alternative exemplary embodiment of the present invention, the ladder is provided in two parts 10a, 10b, wherein the second part 10b is slidably mounted relative to the first part 10a between a fully retracted position (illustrated in Figures 4 and 5 of the drawings), wherein the two parts 10a, 10b of the ladder are substantially parallel, and adjacent, to each other, and a fully extended position (illustrated in Figure 6 of the drawings), in which an upper region of the second ('outer') part 10b is immediately adjacent or below a lower region of the first ladder part 10a and the lower region of the second part 10b is at or adjacent ground level.

Once again, a deployment mechanism is provided between the first ladder part 10a and the drum support assembly, and comprises a housing or bracket 16 and a latch member 18. The latch member 18 comprises a pair of generally L-shaped side arms 18a, as before, with a bar 18b that extends transversely between the distal ends of the side arms 18a. The housing or bracket 16 defines a channel 20 therethrough, as before, that extends in a direction from the ladder 10 to the drum support assembly, and comprises a generally central elongate (linear) portion 20a which terminates at each end with a respective recessed portion 20b. The latch member 18 and housing or bracket 16 are located at the lower region of the first ('inner') ladder part 10a, and the latch member 18 extends into the channel 20 and is slidably received therein.

In the stowed configuration (illustrated in Figures 4 and 5 of the drawings), the first ladder part 10a (and, therefore, the second ladder part 10b) are substantially vertical and the first ladder part 10a is immediately adjacent (or abutting) the housing or bracket 16. In this configuration the first leg of each L-shaped side arm 18a is also substantially vertical, and the latch member 18 is fully inserted along the length of the channel 20 and the bar 18b is held within the recessed portion 20b at the end furthest from the ladder 10. A handle 22 is once again provided on the first leg of each of the side arms 18a.

Referring to Figures 6A to 6C of the drawings, if it is required to move the ladder from the stowed configuration (as illustrated in Figure 6A of the drawings) to a deployed configuration (as illustrated in Figure 6C of the drawings, an operative stands in front of the second ('outer') ladder part 10b, holds the handles 22 and lifts the first and second ladder parts 10a, 10b generally vertically by an amount sufficient to lift the bar 18b of the latch member 18 out of the recessed portion 20b, causing the side arms 18a to pivot slightly relative to the side edges of the first ladder part 10a. This also has the effect of lifting a stowage hook 25a provided at the lower region of the second ladder portion 10b from a trap member 25b that, together, have the effect of preventing sliding movement of the second ladder part 10b relative to the first ladder part 10a when the assembly is in the stowed configuration. This operation also releases a safety latch 27 provided on the housing or bracket 16 that engages with the lower region of the first ladder part 10a when the assembly is in the stowed configuration. The operative can then pull the ladder 10 back (towards the operative) which has the effect of a) causing the first ladder part 10a to pivot outwardly from the fixed mounting point A on the landing platform 12, and b) causing the latch member 18 to slide forward along the central channel portion 20a until the bar 18b drops into the recessed portion 20b at the front end of the housing or bracket 16, as illustrated in Figure 6B of the drawings. The decline defined by the central channel portion 20a in this direction causes the ladder 10 to drop a little toward the ground and the pivoting movement of the first ladder part 10a about the fixed mounting part A on the landing platform 12 allows the first ladder part 10a to be inclined relative to the vertical before sliding the second ladder part 10b downwardly to the fully extended/deployed configuration illustrated in Figure 6C of the drawings. In an exemplary embodiment, a stowage hook 25a is mounted on the lower region of the second ladder part and a cooperative trap member 25b is mounted on the housing or bracket 16. When the stowage hook 25a is located in the trap member 25b, the ladder 10 is held against the housing or bracket 16, the first ladder part 10a is prevented from pivoting and the second ladder part 10b is prevented from sliding relative to the first ladder part 10a. For additional safety, and additional locking mechanism may be provided between the first and second ladder parts 10a, 10b that can be unlocked by an operative only once the latch member has been moved to the deployed configuration, to release the second ladder part 10b and allow it to slide downwardly relative to the first ladder part 10a. A pair of handles 23 may be provided on the side edges of the second ladder part 10b to enable the operative to guide its movement relative to the first ladder part 10a.

When it is required to move the ladder 10 back to the stowed configuration, the operative can simply slide the second ladder part 10b upward relative to the first ladder part 10a, until it is fully parallel and adjacent thereto, lock it in place and then grasp the handles 22 from the front of the ladder and, once again, lift it enough to raise the bar 18b clear of the recessed portion 20b, before pushing the ladder 10 (toward the housing or bracket 16), causing the latch member 18 to slide rearwardly along the central channel portion 20a until the bar 18b reaches the furthest recessed portion 20b. The operative then releases the ladder 10 and allows the bar 18b to drop into that recessed portion 20b to lock the ladder 10 in the stowed position. At the same time, the stowage hook 25a drops into the trap member 25b. As a result of this process, the first ladder part 10a and, therefore, the second ladder part 10b, are returned to a substantially vertical orientation for transit.

Thus, exemplary embodiments of the present invention provides numerous advantages relative to the prior art. An assembly is provided that can be quickly and easily moved between the stowed and deployed positions by simply lifting the ladder from the front thereof (to release the latch member from a latching position) and then pushing or pulling the ladder in a linear direction to pivot the ladder between the stowed and deployed positions. The latching operation occurs automatically when the latch member reaches the limit of travel within the latching mechanism - the operative simply needs to release the force on the ladder. Two hands are required for this operation, which minimises the risk of injury. In a first exemplary embodiment, the latching mechanism facilitates the raising of the lower end of the ladder above ground level when being moved from the deployed to the stowed position, such that the ladder can be provided as a unitary device, eliminating the need for two coupled ladder parts, with a moving mechanism therebetween, and thereby further educing the risk of injury. However, it also provides a second exemplary embodiment on which two ladder parts can safely be deployed and used in an inclined configuration and stored in a vertical configuration. Indeed, and in both exemplary embodiments described above, the assembly enables the ladder to be stored in a vertical position for transit, thereby ensuring that it does not protrude beyond the boundaries of the truck, but also enables it to be used in an position with a uniform incline along its length, which is deemed to be safer for the user.

It will be apparent to a person skilled in the art, from the foregoing description, that modifications and variations can be made to the described embodiments without departing from the scope of the invention as defined by the appended claims. It will also be appreciated that the application of the claimed assembly is not necessarily limited to a vehicle such as a mixer truck: the ladder assembly may be advantageously used in many different applications in which it is periodically required to access the upper reaches of a large structure and maintain the ladder in a stowed position when not in use, and the present invention is not necessarily intended to be limited in this regard.

## Claims

1. A ladder assembly for, in use, providing access to the upper regions of a vehicle, the ladder assembly comprising:
- a ladder having upper and lower ends when oriented for use, and being pivotally coupled to a fixed point relative to said vehicle for pivotal movement about a substantially horizontal axis between a stowed position, in which said ladder extends substantially vertically from said fixed point, and a deployed position, in which said ladder is inclined from said upper to said lower end;
- a latch member coupled to said ladder at a location along its length intermediate said upper and lower ends; and
- a latch receiving member coupled to a fixed point relative to said vehicle and configured to receive said latch member and permit, in use, movement of the latch member therein between a first latching position and a second latching position corresponding to respective said stowed and deployed positions of said ladder.

2. A ladder assembly according to claim 1, wherein said stowed position, the lower end of said ladder is raised above ground level and in said deployed position, the lower end of said ladder rests on the ground surrounding said vehicle.

3. A ladder assembly according to claim 1 or claim 2, wherein said ladder comprises two ladder portions, movably mounted relative to each other, and wherein, in said stowed configuration, said ladder portions are substantially parallel and adjacent to each other, and in said deployed configuration, an upper region of a first of said ladder portions is adjacent to a lower region of a second of said ladder portions, and the first and second ladder portions are substantially aligned, with a lower region of said first ladder portion resting on the ground surrounding said vehicle.

4. A ladder assembly according to claim 3, wherein said second ladder portion is pivotally mounted to said fixed point at an upper region thereof and said latch member is mounted at an opposing lower region thereof.

5. A ladder assembly according to any of the preceding claims, wherein said latch receiving member defines a guide member with which said latch member engages, in use, said guide member being configured to guide said latch member, during movement thereof, between said first and second latching positions; and optionally wherein said guide member is a channel within which said latch member is received, said channel extending between said first and second latching positions.

6. A ladder assembly according to claim 5, wherein said first and second latching positions are defined by respective recessed portions provided at respective ends of said channel; and/or wherein said guide member defines a declined path from said first latching position, in which said ladder is in said stowed position, to said second latching position, in which said ladder is in said deployed position, and optionally wherein said latch member comprises a lateral bar configured to be received within each of said recessed portions.

7. A ladder assembly according to any of the preceding claims, further comprising one or more grip members coupled to said ladder and configured to enable, in use, an operative to release said latch member from said first or second latching position and move said ladder between said stowed and deployed positions; and/or wherein said ladder comprises a landing platform at its upper end, said landing platform being coupled at a fixed point to said vehicle, and said ladder being pivotally coupled to said landing platform such that it extends downwardly below said landing platform and being configured for pivotal movement about a substantially horizontal axis between said stowed and deployed positions.

8. A ladder assembly according to any of the preceding claims, wherein said ladder, at least in said deployed configuration, comprises a pair of elongate uprights arranged in parallel spaced-apart relation to each other and having a series of spaced-apart rungs extending therebetween along their length, wherein the length of the uprights define respective side edges of said ladder and the region containing said rungs defines the rear and front surfaces of the ladder; said ladder being pivotally coupled, in use, to said fixed point with said rear surface thereof facing said vehicle and said latch receiving member being configured to be coupled to a fixed point on said vehicle adjacent the rear surface of said ladder, wherein the application to said ladder of a linear force toward or away from said latching mechanism results in said pivotal movement into, respectively, said stowed and deployed positions; and optionally wherein said elongate uprights comprise unitary elongate uprights.

9. A ladder assembly according to claim 8, wherein said latch member is coupled to said side edges of said ladder and extends into said latch receiving member from the rear of said ladder.

10. A ladder assembly according to claim 9, wherein said latch member is coupled to said side edges of said ladder by means of a respective pair of opposing arms extending generally orthogonally from the rear of said ladder, said latch member comprising a bar that extends laterally between the distal ends of said arms.

11. A ladder assembly according to claim 10, wherein said latch receiving member comprises a channel in which said bar at the end of said opposing arms is received for sliding movement, said channel extending from said first latching position to said second latching position; and optionally wherein each latching position is defined by a respective recessed portion at each end of said channel, wherein said bar is configured to be received in a selected one of said recessed portions to latch said ladder in a selected on of the stowed position or deployed position respectively.

12. A ladder assembly according to claim 11, wherein said channel is inclined from said second latching position to said first latching position, and optionally further comprising a pair of handles attached to respective side edges of said ladder, at or adjacent the location of said arms, the handles being configured, in use, to permit an operative to lift said ladder from a position at the front thereof, thereby to lift said bar out of a recessed portion and allow movement of said ladder between the stowed and deployed positions.

13. A ladder assembly according to any of the preceding claims, wherein guide means are provided on the lower end of the ladder to reduce friction between said lower end of said ladder and the ground to facilitate sliding movement of said lower end along the ground during movement of the ladder between said stowed and deployed positions.

14. A truck having mounted thereon a ladder assembly according to any of the preceding claims.

15. A mixer truck having mounted thereon a ladder assembly according to any of the preceding claims.
